**Europäisches Patentamt**

**European Patent Office**

**Office européen des brevets**

(19)

(11) Publication number : **0 478 527 A2**

(12)

# EUROPEAN PATENT APPLICATION

(21) Application number : **91870148.3**

(22) Date of filing : **27.09.91**

(51) Int. Cl.⁵ : **C08L 27/06, C08K 5/523**

(30) Priority : **28.09.90 US 590248**

(43) Date of publication of application :
**01.04.92 Bulletin 92/14**

(84) Designated Contracting States :
**AT BE CH DE DK ES FR GB GR IT LI LU NL SE**

(71) Applicant : **MONSANTO COMPANY**
**Patent Department 800 North Lindbergh**
**Boulevard**
**St. Louis, Missouri 63167 (US)**

(72) Inventor : **Paul, David Harrison**
**1213 South Berry Road**
**Oakland, Missouri 63112 (US)**

(74) Representative : **Ernst, Hubert et al**
**Monsanto Services International S.A., Patent**
**Department, Avenue de Tervuren 270-272,**
**Letter Box No. 21**
**B-1150 Brussels (BE)**

(54) **Phosphate ester plasticizer.**

(57)  Polyvinyl chloride resin compositions and a phosphate ester plasticizer for the resin is disclosed. The plasticizer is a straight chain monoalkyl diaryl phosphate ester in which the alkyl radical has from 12 to 18 carbon atoms.

EP 0 478 527 A2

## BACKGROUND OF THE INVENTION

This invention relates to novel compositions comprising monoalkyl diaryl phosphate esters and polymerized vinyl resins. More particularly, this invention relates to plasticized resin compositions containing certain monoalkyl diaryl phosphate esters and resins containing polymerized vinyl monomers which demonstrate improved heat resistance, flame retardance and smoke suppression properties in combination with improved low temperature flexibility.

## DESCRIPTION OF THE PRIOR ART

Heretofore, resins such as polyvinyl chloride or copolymer resins such as polyvinyl chloride-acetate, which are normally rigid and brittle in their unplasticized state, have been commonly plasticized with compounds which contain phthalates or phosphate esters. Films and sheets formed from the plasticized resins possess, in addition to other desirable properties, a durability and flexibility which gives them extensive utility. It was both necessary and highly desirable that a single plasticizer be developed for incorporation into polyvinyl chloride resin that would produce a plastic composition having the three essential characteristics of low-temperature flexibility, low volatility losses of the plasticizer and non-inflammability. Compounds containing certain phosphate esters have been used in the past as plasticizers for polyvinyl chloride resins.

United States Patent 2,557,089 teaches a composition comprising polyvinyl chloride resins and monoalkyl diaryl phosphate esters wherein the alkyl radical contains at least six and not more than twelve carbon atoms. The diaryl radical is taught to be either a diphenyl or a dicresyl group. The patent also teaches that a plasticized polyvinyl chloride resin composition may be produced using a single plasticizer in combination with the polyvinyl chloride resin wherein the composition will have at least the three highly desirable characteristics of low-temperature flexibility, low volatility loses of plasticizer and non-inflammability.

United States Patent 2,557,090 contains teachings similar to those in United States Patent 2,557,089. It teaches a composition comprising polyvinyl chloride resin and monoalkoxyethyl diaryl phosphate esters wherein the alkoxy radical contains at least four and not more than twelve carbon atoms. The patent also teaches that the aryl radical may be a phenyl or a cresyl group. It is stated that the composition of this patent will exhibit the desired characteristics of low-temperature flexibility, low volatility losses of plasticizer and non-inflammability.

United States Patent 2,596,141 teaches a monoalkyl diphenyl phosphate ester compound in which the alkyl radical must be a branched carbon chain that contains at least six and not more than eighteen carbon atoms. There is further teaching that the compounds are nontoxic and that, unexpectedly and significantly, the branched chain alkyl diphenyl phosphate esters possess an outstanding hydrolytic stability which allows the preparation of exceptionally stable polyvinyl chloride resin compositions. It is stated that the esters taught in this patent, throughout the range of the alkyl radicals, are liquids at ordinary temperatures whereas straight chain alkyl diphenyl phosphate esters are solids or tend to solidify at ordinary temperatures. As a result of this physical property and their outstanding hydrolytic stability, it is stated, the branched chain alkyl diaryl phosphate esters of this patent find utility in many applications whereas the straight chain alkyl diphenyl phosphate esters have little or no utility.

The plasticizers disclosed in the patents discussed above are said to exhibit the three essential characteristics of low-temperature flexibility, low volatility losses of the plasticizer and non-inflammability. The use of these plasticizers has declined through the years because they do not meet the service requirements for today's plastics. The plasticizers most commonly used for polyvinyl chloride resins today are phthalate compounds, such as di-isodecyl phthalate, di-undecyl phthalate, and ditridecyl phthalate; tri-aryl phosphate esters, such as tri-xylyl phosphate; tri-alkyl phosphate esters, such as trioctyl phosphate; and alkyl diaryl phosphate esters, such as isodecyl diphenyl phosphate ester and 2-ethylhexyl diphenyl phosphate ester.

However, today more is required of plastics and the plasticizers used with them. In addition to the still important low-temperature flexibility, today's plastics are exposed to higher temperatures for longer periods of time and it is desired that they maintain their flexibility. Furthermore, governments have imposed new requirements regarding flame resistance and smoke generation. Thus today's plastic compositions must have a heat resistance and other enhanced characteristics that earlier compositions did not have. This has placed new requirements on the plasticizer compounds because the polyvinyl chloride resins have changed little from those used in the past.

## SUMMARY OF THE INVENTION

This invention is directed to a polyvinyl chloride resin composition which contains a polyvinyl chloride resin and a flame retardant and heat resistant amount of a straight chain monoalkyl diaryl phosphate ester wherein the alkyl radical contains at least 12 and not more than 18 carbon atoms.

Polyvinyl chloride polymers and copolymers are preferred because of their great use; however, it is recognized that this invention may also use any other vinyl halide polymer or copolymer, such as vinyl fluoride polymers and copolymers, which is valued for its elastomeric properties when it is plasticized. Resins containing polymerized vinyl halides, such as the preferred vinyl chloride, which are considered as being suitable for the purposes of this invention will be referred to broadly as "polyvinyl chloride resins" with the intention that "polyvinyl chloride resins" shall include polymerized vinyl chloride (polyvinyl chloride), polyvinyl chloride-acetate, copolymers of vinyl chloride such as, for example, copolymers with methyl methacrylate, diethyl maleate or vinylidene chloride, and compositions containing both polymerized vinyl chloride and copolymers of vinyl chloride.

The invention includes compositions in which mixtures of the alkyl radical are present, for example, compositions containing a heat resistant amount of straight chain monoalkyl diaryl phosphate esters wherein the alkyl radical is a mixture of dodecyl and tetradecyl radicals. An example of the contemplated mixture is a mixture in which the straight chain monoalkyl diaryl phosphate ester contains 85% straight chain dodecyl diaryl phosphate ester and 15% straight chain tetradecyl diaryl phosphate ester.

In the plasticized resin art the plasticizer content of the plasticized resin composition is frequently expressed on the basis of parts of plasticizer by weight per 100 parts by weight of the resin to be plasticized. Therefore, according to this manner of expression, the flame retardant and heat resistant plasticized polyvinyl chloride resin compositions of this invention may be expressed as containing from about 10 parts to about 100 parts by weight of the straight chain monoalkyl diaryl phosphate ester as a plasticizer per 100 parts by weight of the polyvinyl chloride resin. When the plasticizer content of the composition is below the lower limit of 10 parts plasticizer per 100 parts resin, the flexibility characteristics of the resulting composition are seriously impaired. A composition containing 100 parts by weight of plasticizer per 100 parts by weight of resin approaches the upper limits of practical utility. It has been found that compositions containing from about 20 parts to about 80 parts by weight of a straight chain monoalkyl diaryl phosphate ester plasticizer of this invention per 100 parts by weight of a polyvinyl chloride resin are more desirable. The preferred polyvinyl chloride compositions, which have improved heat resistance, fire retardance and smoke suppression, are those compositions containing from about 30 parts to about 60 parts by weight of a straight chain monoalkyl diaryl phosphate ester plasticizer of this invention per 100 parts by weight of a polyvinyl chloride resin.

DESCRIPTION OF THE PREFERRED EMBODIMENTS

The monoalkyl diaryl phosphate esters of this invention may be prepared in the manner illustrated by the following examples.

EXAMPLE I

Dodecyl Diphenyl Phosphate Ester

In a glass lined, closed reaction vessel, 108.4 grams of phosphorus oxychloride, $POCl_3$, were cooled with stirring to a temperature of about 5°C. Then 130.59 grams of straight chain dodecanol were cooled to a temperature between about 5°C. and about 10°C. and added to the vessel while stirring continuously to maintain the reaction mass temperature below about 10°C. After all of the dodecanol was added, the temperature of the reaction mixture was allowed to rise to room temperature and the mixture was placed under a vacuum to remove the hydrogen chloride gas that was evolved during the reaction. An aqueous solution of sodium phenate was prepared by adding 143.2 grams of phenol to 179 grams of water having dissolved therein 134.7 grams of 50% sodium hydroxide while maintaining the solution at a temperature between 5°C. and 15°C. The aqueous sodium phenate solution was cooled to about 5°C. and 210.0 grams of the above prepared dodecyl phosphoryl dichloride were added to the solution over a period of time and at such a rate as to maintain the solution at a temperature less than about 10°C. After the dodecyl phosphoryl dichloride was added to the sodium phenate solution, the reaction was taken to completion. It was then allowed to stand and to warm to a temperature of about 20°C. as it separated into an ester layer and an aqueous layer. The ester layer was removed and given successive washes with a solution of 400 milliliters of water and then dehydrated through exposure to steam at about 150°C. The yield was 249.9 grams of dodecyl diphenyl phosphate ester, a yield of 84.8% based upon phosphorus oxychloride.

EXAMPLE II

Tetradecyl Diphenyl Phosphate Ester

In a glass lined, closed reaction vessel, 107.3 grams of phosphorus oxychloride, $POCl_3$, were cooled with stirring to a temperature of about 5°C. Then 153.1 grams of straight chain tetradecanol were cooled to a temperature between about 5°C. and about 10°C. and added to the vessel while stirring continuously to maintain the reaction mass temperature below about 10°C. After all of the tetradecanol was added, the temperature of the reaction mixture was allowed to rise to room temperature and the mixture was placed under a vacuum to remove the hydrogen chloride gas that was evolved during the reaction. An aqueous solution of sodium phenate was prepared by adding 140.91 grams of phenol to 123.6 grams of water having dissolved therein 131.21 grams of 50% sodium hydroxide while maintaining the solution at a temperature between 5°C. and 15°C. The aqueous sodium phenate solution was cooled to about 5°C. and 229.92 grams of the above prepared tetradecyl phosphoryl dichloride were added to the solution over a period of time and at such a rate as to maintain the solution at a temperature less than about 10°C. After the tetradecyl phosphoryl dichloride was added to the sodium phenate solution, the reaction was taken to completion. It was then allowed to stand and to warm to a temperature of about 20°C. as it separated into an ester layer and an aqueous layer. The ester layer was removed and given successive washes with a solution of 50 milliliters of methanol and 50 grams of sodium chloride in 600 milliliters of water and then dehydrated through exposure to steam at about 150°C. The yield was 261.53 grams of tetradecyl diphenyl phosphate ester, a yield of 82.6% based upon phosphorus oxychloride.

EXAMPLE III

Oleyl Diphenyl Phosphate Ester

In a glass lined, closed reaction vessel, 92.0 grams of phosphorus oxychloride, $POCl_3$, were cooled with stirring to a temperature of about 5°C. Then 164.43 grams of straight chain oleyl alcohol (9,10-octadecenol) were cooled to a temperature between about 5°C. and about 10°C. and added to the vessel while stirring continuously to maintain the reaction mass temperature below about 10°C. After all of the oleyl alcohol was added, the temperature of the reaction mixture was allowed to rise to room temperature and the mixture was placed under a vacuum to remove the hydrogen chloride gas that was evolved during the reaction. An aqueous solution of sodium phenate was prepared by adding 120.20 grams of phenol to 200.12 grams of water having dissolved therein 106.57 grams of 50% sodium hydroxide while maintaining the solution at a temperature between 5°C. and 15°C. The aqueous sodium phenate solution was cooled to about 5°C. and 227.90 grams of the above prepared oleyl phosphoryl dichloride were added to the solution over a period of time and at such a rate as to maintain the solution at a temperature less than about 10°C. After the oleyl phosphoryl dichloride was added to the sodium phenate solution, the reaction was taken to completion. It was then allowed to stand and to warm to a temperature of about 20°C. as it separated into an ester layer and an aqueous layer. The ester layer was removed and given successive washes with a solution of 50 milliliters of methanol and 50 grams of sodium chloride in 600 milliliters of water and then dehydrated through exposure to steam at about 150°C. The yield was 212.69 grams of oleyl diphenyl phosphate ester, a yield of 69.9% based upon phosphorus oxychloride.

In the plasticized resin art the plasticizer content of the plasticized resin composition is frequently expressed on the basis of parts of plasticizer by weight per 100 parts by weight of the resin to be plasticized. Therefore, according to this manner of expression, the heat resistant plasticized polyvinyl chloride resin compositions of this invention may be expressed as containing from about 10 parts to about 100 parts by weight of the straight chain monoalkyl diaryl phosphate ester as a plasticizer per 100 parts by weight of the polyvinyl chloride resin. When the plasticizer content of the composition is below the lower limit of 10 parts plasticizer per 100 parts resin, the flexibility characteristics of the resulting composition are seriously impaired. A composition containing 100 parts by weight of plasticizer per 100 parts by weight of resin approaches the upper limits of practical utility. It has been found that compositions containing from about 20 parts to about 80 parts by weight of a straight chain monoalkyl diaryl phosphate ester plasticizer of this invention per 100 parts by weight of a polyvinyl chloride resin are more desirable. The preferred polyvinyl chloride compositions, which have improved heat resistance, fire retardance and smoke suppression, are those compositions containing from about 30 parts to about 60 parts by weight of a straight chain monoalkyl diaryl phosphate ester plasticizer of this invention per 100 parts by weight of a polyvinyl chloride resin.

Many polyvinyl chloride compositions contain inorganic compounds to improve their fire retardant properties such as, for example, molybdenum trioxide, alumina trihydrate and antimony trioxide. In addition it is often desired to use a combination of two or more plasticizers instead of a single plasticizer. When that occurs the total amount of plasticizers added to the composition may remain about the same; however, the amount of each individual plasticizer that is added will be reduced. Rubbery ethylene copolymers and terepolymers are often added and they provide an effect as both a plasticizer and as a processing aid. Other plasticizers such as trioctyl trimellitate are also used. The use of materials such as these'reduces the amount of the monoalkyl diaryl phosphate ester plasticizer of this invention that would be needed to provide the desired softening of the polyvinyl chloride resin and, in those cases, less than 10 parts by weight of the monoalkyl diaryl phosphate ester plasticizer may be used per 100 parts by weight of the polyvinyl chloride resin.

The polyvinyl chloride compositions discussed above, in which the plasticizers of this invention are present within a range of from about 10 parts to about 100 parts by weight per 100 parts by weight of the polyvinyl chloride resin composition, are compositions which do not contain the fillers, combinations of plasticizers, and inorganic materials that are commonly added to polyvinyl chloride resin compositions. When these other materials are added to the polyvinyl chloride resin compositions, the amount of plasticizer in relation to the total plasticized composition will be lower; however, the amount of plasticizer in relation to the polyvinyl chloride resin will remain about the same.

It is recognized that small amounts of thermal stabilizers are often added to polyvinyl chloride resin compositions to prevent the heat decomposition of the polyvinyl chloride resin at the temperatures used during the mixing of the polyvinyl chloride resin and the plasticizer or those used during molding of the composition into finished articles. These stabilizers are most often compounds such as dibasic lead phosphate and dibasic lead stearate which are added to the composition in an amount from about 0.1 part to about 5 parts by weight per 100 parts by weight of polyvinyl chloride resin.

In addition to plasticizers and stabilizers, polyvinyl chloride resin compositions generally include fillers such as calcium carbonate and clay, antioxidants such as bisphenol, lubricants such as stearic acid and paraffin waxes, pigments such as titanium dioxide, impact modifiers such as methacrylate butadiene styrene terpolymers and flame retardants such as molybdenum trioxide and antimony trioxide and these materials may be included in any plasticized polyvinyl chloride resin composition produced according to this invention.

The alkyl diaryl phosphate ester plasticizer may be incorporated into the polyvinyl chloride resin through the use of a two-roll differential speed mill or other well known means for mixing or kneading. Any of the well known means for mixing and kneading will provide sufficient blending provided that the temperature of the composition is maintained between 100°C. and 200°C. during the mixing.

The following methods, which are well known to those persons skilled in the art of plasticizing resinous compositions, were used in testing the plastic compositions described below. The low temperature flexibility points were determined by the method described by Crash and Berg in "Industrial Engineering Chemistry", 34, 1218 (1942). Volatility was determined by exposing samples of polyvinyl chloride resin compositions containing about 65 parts by weight of plasticizer per 100 parts by weight of the polyvinyl chloride resin in a Freas circulating oven to a temperature of 87°C. for a period of 24 hours and for 14 days and then calculating the loss of weight as a percent loss of plasticizer. Flammability was determined by igniting the material in a two foot long tunnel, patterned after ASTM D-3806-79, and measuring the flame spread and the length of the char that formed on the material. The amount of smoke produced by the compositions was determined in accordance with the U.S. National Bureau of Standards Smoke Chamber test, ASTM E-662, corrected for optical density, which measures the density of the smoke produced when flames are present and during a smoldering mode. The terms "heat resistance" or a "heat resistant material" refer to a material's retention of its ability to stretch without breaking after prolonged exposure to elevated temperatures and it is expressed as a percent of maximum elongation. The heat resistance or retained elongation is measured in accordance with the Underwriters Laboratory Standard UL-1581. The heat resistance was determined by measuring the maximum elongation of molded samples of plasticized polyvinyl chloride resin compositions after aging for a period of seven days at 113°C. and calculating the elongation as a percent of the maximum elongation of the sample measured at the time it was molded.

The plasticized compositions were also tested using a kerosene extraction test and a water extraction test to demonstrate the loss of plasticizer by the composition. For the kerosene extraction test, the plasticized composition was placed in a kerosene bath and kept at temperature of 25°C. for a period of 24 hours. The loss of weight was calculated as a loss of plasticizer. The water extraction test was similar. The plasticized composition was placed in a water bath and kept at a temperature of 50°C. for a period of 24 hours during which time the composition absorbed water and lost plasticizer. Then the composition was dried at a temperature of 50°C. for a period of 24 hours and the loss of weight between the original composition weight and the final dried weight was calculated as a percent loss of the plasticizer.

Example IV - Prior Art

One hundred parts by weight of polyvinyl chloride resin were intimately mixed with 67 parts by weight of 2-ethylhexyl diphenyl phosphate ester as a plasticizer, and with 4 parts by weight of dibasic lead phosphate and $\frac{1}{2}$ part by weight of dibasic lead stearate as stabilizers for the polyvinyl chloride resin and this mixture was milled for 5 minutes at a temperature of 165°C. to form a homogeneous composition. A portion of the composition was placed in a mold for 10 minutes at a temperature of 170°C. to form a sheet having a thickness of about 1.0 millimeter. Upon removal of the sheet from the mold, evaluation tests were run in accordance with the directions contained in the references set out above. The observed results of these tests are tabulated in Table 1 below.

Example V - Prior Art

The process of Example IV wherein the polyvinyl chloride resin was mixed with a plasticizer was repeated and different plasticizers were used. The plasticizers that were used in this Example were (A) Undecyl diphenyl phosphate ester and (B) Decyl diphenyl phosphate ester. Upon removal of the sheet from the mold, evaluation tests were run in accordance with the directions contained in the references set out above. The process of this Example was repeated to produce two additional compositions having 50 parts by weight of each plasticizer mixed with the polyvinyl chloride resin. These additional compositions were used for the flammability and smoke chamber tests. The observed results of the tests are tabulated in Table 1 below.

Example VI - Prior Art

One hundred parts by weight of polyvinyl chloride resin were intimately mixed with 67 parts by weight of iso-decyl diphenyl phosphate ester as a plasticizer, and with 4 parts by weight of dibasic lead phosphate and $\frac{1}{2}$ part by weight of dibasic lead stearate as stabilizers for the polyvinyl chloride resin and this mixture was milled for 5 minutes at a temperature of 165°C. to form a homogeneous composition. A portion of the composition was placed in a mold for 10 minutes at a temperature of 170°C. to form a sheet having a thickness of about 1.0 millimeter. Upon removal of the sheet from the mold, evaluation tests were run in accordance with the directions contained in the references set out above. The process of this Example was repeated to produce an additional composition having 50 parts by weight of plasticizer mixed with the polyvinyl chloride resin. This additional composition was used for the flammability and smoke chamber tests. The observed results of the tests are tabulated in Table 1 below.

Example VII

One hundred parts by weight of polyvinyl chloride resin were intimately mixed with 67 parts by weight of dodecyl diphenyl phosphate ester as a plasticizer, and 1 part by weight of a solid barium cadmium stabilizer for the polyvinyl chloride resin and this mixture was milled for 5 minutes at a temperature of 165°C. to form a homogeneous composition. A portion of the composition was placed in a mold for 10 minutes at a temperature of 170°C. to form a sheet having a thickness of about 1.0 millimeter. Upon removal of the sheet from the mold, evaluation tests were run in accordance with the directions contained in the references set out above. The process of this Example was repeated to produce an additional composition having 50 parts by weight of plasticizer mixed with the polyvinyl chloride resin. This additional composition was used for the flammability and smoke chamber tests. The observed results of these tests are tabulated in Table 1 below.

Example VIII

The process of Example VII wherein a polyvinyl chloride resin was mixed with a plasticizer was repeated using tetradecyl diphenyl phosphate ester as the plasticizer. The results of the tests performed on these samples are tabulated in Table 1 below.

Example IX

One hundred parts by weight of polyvinyl chloride resin were intimately mixed with 67 parts by weight of a plasticizer mixture containing 85% dodecyl diphenyl phosphate ester and 15% tetradecyl diphenyl phosphate ester, 4 parts by weight of dibasic lead phosphate and $\frac{1}{2}$ part by weight of dibasic lead stearate as stabilizers for the polyvinyl chloride resin and this mixture was milled for 5 minutes at a temperature of 165°C. to form a homogeneous composition. A portion of the composition was placed in a mold for 10 minutes at a temperature of 170°C. to form a sheet having a thickness of about 1.0 millimeter. Upon removal of the sheet from the mold, evaluation tests were run in accordance with the directions contained in the references set out above. The process of this Example was repeated to produce an additional composition having 50 parts by weight of plasticizer mixed with the polyvinyl chloride resin. This additional composition was used for the flammability and smoke chamber tests. The observed results of these tests are tabulated in Table 1 below.

Example X

One hundred parts by weight of polyvinyl chloride resin were intimately mixed with 40 parts by weight of oleyl diphenyl phosphate ester as a plasticizer, 30 parts by weight of calcium carbonate as a filler, and as stabilizers 2 parts by weight of a solid barium-calcium mixture (a mixture of a fatty acid soap of barium and a fatty acid soap of cadmium) and 5 parts by weight of a synthetic epoxy resin and this mixture was milled for 5 minutes at a temperature of 165°C. to form a homogeneous composition. A portion of the composition was placed in a mold for 10 minutes at a temperature of 170°C. to form a sheet having a thickness of about 1.0 millimeter. Upon removal of the sheet from the mold, evaluation tests were run in accordance with the directions contained in the references set out above. The observed results of these tests are tabulated in Table 1 below.

The foregoing description of this invention is not intended to limit the invention. As will be apparent to those skilled in the art, many variations on and modifications to the embodiment described above may be made without departure from the spirit and scope of this invention.

Table I

| No. | Example Parts of Plasticizer | Volatility Plast. % Loss 1 Day | Volatility Plast. % Loss 14 Day | Kerosene Extraction Plasticizer % Loss | Water Extraction Water % Absorb | Water Extraction Plast. % Loss | Heat Resistance % of Max. Elongation |
|---|---|---|---|---|---|---|---|
| IV | 67 | 9.8 | 63.5 | 12.40 | 0.36 | 0.14 | |
| V-A | 67 | 3.5 | 20.8 | 21.40 | 0.42 | 0.32 | |
| | 50 | | | | | | |
| V-B | 67 | 4.0 | 22.1 | 6.19 | 0.42 | 0.26 | |
| | 50 | | | | | | |
| VI | 67 | 5.6 | 38.1 | 10.70 | 0.38 | 0.31 | |
| | 50 | | | | | | |
| VII | 67 | 3.4 | 12.5 | 11.70 | 0.41 | 0.31 | 60 |
| | 50 | | | | | | |
| VIII | 67 | 4.0 | 10.5 | | 0.34 | 0.29 | |
| | 50 | | | | | | |
| IX | 67 | 1.3 | 4.5 | 15.80 | 0.38 | 0.29 | |
| | 50 | | | | | | |
| X | 67 | 4.1 | 14.2 | 4.05 | 0.31 | 0.50 | |

EP 0 478 527 A2

EP 0 478 527 A2

TABLE I (cont'd)

| Example No. | Parts of Plasticizer | Flambility Flame Spread (cm) | Char. Length (cm) | Smoke Test Corrected Optical Density Flaming | Smolderinq | Low. Temp. Flex Point |
|---|---|---|---|---|---|---|
| IV | 67 | | | | | |
| V-A | 67 | | | | | -39°C |
| | 50 | | 28.4 | 303 | 143 | |
| V-B | 67 | | | | | -40°C |
| | 50 | | 29.7 | 336 | 133 | |
| VI | 67 | | | | | -32°C |
| | 50 | | 27.4 | 335 | 157 | |
| VII | 67 | | | | | -42°C |
| | 50 | | 26.9 | 285 | 140 | |
| VIII | 67 | | | | | -40°C |
| | 50 | | 26.7 | 318 | 206 | |
| IX | 67 | | | | | -40°C |
| | 50 | 46.2 | 30.0 | 285 | 82 | |
| X | 67 | | | | | -50°C |

**Claims**

1. A polyvinyl chloride resin composition comprising a polyvinyl chloride resin and a straight chain monoalkyl diaryl phosphate ester, said alkyl radical having from 12 to 18 carbon atoms.

2. The polyvinyl chloride resin composition of Claim 1 wherein said polyvinyl chloride resin is selected from the group consisting of polyvinyl chloride, polyvinyl chloride-acetate, copolymers of vinyl chloride and mixtures of polymerized vinyl chloride and copolymers of vinyl chloride.

3. The polyvinyl chloride resin composition of Claim 2 comprising from about 10 parts to about 100 parts by weight of said straight chain monoalkyl diaryl phosphate ester per 100 parts by weight of said polyvinyl chloride resin.

4. The polyvinyl chloride resin composition of Claim 3 comprising from about 20 parts to about 80 parts by weight of said straight chain monoalkyl diaryl phosphate ester per 100 parts by weight of said polyvinyl chloride resin.

5. The polyvinyl chloride resin composition of Claim 4 comprising from about 30 parts to about 60 parts by weight of said straight chain monoalkyl diaryl phosphate ester per 100 parts by weight of said polyvinyl chloride resin.

6. The polyvinyl chloride resin composition of Claim 3 wherein said straight chain monoalkyl diaryl phosphate ester is selected from the group consisting of dodecyl diphenyl phosphate ester, tetradecyl diphenyl phosphate ester and mixtures of dodecyl diphenyl phosphate ester and tetradecyl diphenyl phosphate ester.

7. The polyvinyl chloride resin composition of Claim 6 wherein said straight chain monoalkyl diaryl phosphate ester is a mixture of 85% dodecyl diphenyl phosphate ester and 15% tetradecyl diphenyl phosphate ester.

8. A fire retardant polyvinyl chloride resin composition comprising a polyvinyl chloride resin selected from the group consisting of polyvinyl chloride, polyvinyl chloride-acetate, copolymers of vinyl chloride and mixtures of polymerized vinyl chloride and copolymers of vinyl chloride and a fire retardant amount of a straight chain monoalkyl diaryl phosphate ester, said alkyl radical having from 12 to 18 carbon atoms.

9. The fire retardant polyvinyl chloride resin composition of claim 8 comprising from about 10 parts to about 100 parts by weight of said straight chain monoalkyl diaryl phosphate ester per 100 parts by weight of said polyvinyl chloride resin.

10. The fire retardant polyvinyl chloride resin composition of claim 9 comprising from about 20 parts to about 80 parts by weight of said straight chain monoalkyl diaryl phosphate ester per 100 parts by weight of said polyvinyl chloride resin.

11. The fire retardant polyvinyl chloride resin composition of claim 10 comprising from about 30 parts to about 60 parts by weight of said straight chain monoalkyl diaryl phosphate ester per 100 parts by weight of said polyvinyl chloride resin.

12. A fire retardant and heat resistant plasticizer for polyvinyl chloride resins comprising a straight chain monoalkyl diaryl phosphate ester, said alkyl radical having from 12 to 18 carbon atoms.

13. The fire retardant and heat resistant plasticizer for polyvinyl chloride resins of Claim 12 wherein said straight chain monoalkyl diaryl phosphate ester is selected from the group consisting of dodecyl diphenyl phosphate ester, tetradecyl diphenyl phosphate ester and mixtures of dodecyl diphenyl phosphate ester and tetradecyl diphenyl phosphate ester.

14. The fire retardant and heat resistant plasticizer for polyvinyl chloride resins of Claim 13 wherein said straight chain monoalkyl diaryl phosphate ester is a mixture of 85% dodecyl diphenyl phosphate ester and 15% tetradecyl diphenyl phosphate ester.

15. A fire retardant and heat resistant polyvinyl chloride resin composition comprising a polyvinyl chloride resin and from about 30 parts to about 60 parts by weight per 100 parts by weight of said polyvinyl chloride resin of a plasticizer, said plasticizer comprising a mixture of 85% straight chain dodecyl diphenyl phosphate ester and 15% straight chain tetradecyl diphenyl phosphate ester.